# EUROPÄISCHE PATENTSCHRIFT

(11) **EP 1 863 166 B1**
(45) Veröffentlichungstag und Bekanntmachung des Hinweises auf die Patenterteilung: **31.12.2008**
(21) Anmeldenummer: 07107784.6
(22) Anmeldetag: 09.05.2007
(51) Int. Cl.: H02P 9/06, H02P 9/04, H02K 7/10, F02C 3/113, F02C 7/32, H02K 7/102, H02K 7/108, H02K 7/114

(54) **Zwei-Wellen-Triebwerk für Flugzeuge mit hohem Bedarf an elektrischer Leistung**
Double-spool engine for aircraft with high consumption of electrical power
Turbine à deux ondes pour avions ayant un besoin élevé de puissance électrique

(30) Priorität: 02.06.2006 DE 102006026287
(43) Veröffentlichungstag der Anmeldung: 05.12.2007
(73) Patentinhaber: Rolls-Royce Deutschland Ltd & Co KG, 15827 Blankenfelde-Mahlow (DE)
(72) Erfinder: Talan, Metin, Dr., 10967 Berlin (DE)
(74) Vertreter: Wablat, Wolfgang

(56) Entgegenhaltungen:
- EP-A- 1 519 018
- EP-A- 1 617 053
- WO-A-95/02120
- DE-A1-8102004 023 09

## Beschreibung

Die Erfindung bezieht sich auf ein Zwei-Wellen-Triebwerk für Flugzeuge mit hohem Bedarf an elektrischer Leistung, das eine mit Generatoren verbundene, von einer Hochdruckturbine angetriebene Hochdruckwelle und eine von einer Niederdruckturbine angetriebene Niederdruckwelle sowie eine elektronische Triebwerkssteuerung umfasst, wobei die Niederdruckwelle zur Leistungsübertragung auf die Hochdruckwelle über eine an die Triebwerkssteuerung angeschlossene Kupplung an die Hochdruckwelle gekoppelt ist.

Der Bedarf an elektrischer Leistung von Flugzeugen ist durch die Umstellung vieler Systeme auf elektrischen Betrieb in ständigem Steigen begriffen. Bei mit Zwei-Wellen-Triebwerken ausgerüsteten Flugzeugen mit hohem elektrischem Leistungsbedarf (Mehr-Elektrik-Anwendung) ist die Leistungsreserve der Hochdruckwelle im Leerlauf des Triebwerks (geringe Drehzahlen) jedoch nicht hoch genug, um den erhöhten Leistungsforderungen des Flugzeugs gerecht zu werden. Die zur Erzeugung der erforderlichen zusätzlichen elektrischen Leistung daher naheliegende Nutzung der Niederdruckwelle des Triebwerks, die selbst im Leerlauf über hohe Leistungsreserven verfügt, durch Leistungsübertragung von dieser Welle auf die Hochdruckwelle bzw. Generatoren bereitet aber insofernSchwierigkeiten, weil das Verhältnis der höchsten Drehzahl zur niedrigsten Drehzahl der Niederdruckwelle viel größer ist als das entsprechende Drehzahlverhältnis der Hochdruckwelle bzw. der Generatoren. Eine Leistungsübertragung von der Niederdruckwelle zu den Generatoren durch ein mechanisches Getriebe erfordert daher ein mehrfaches Schaltungssystem, was konstruktiv und schaltungsseitig aufwendig ist und insbesondere ein hohes zusätzliches Gewicht zur Folge hat und dessen Zuverlässigkeit wegen den erforderlichen mehrfachen Schaltungen nicht gewährleistet ist.

Ein Zwei-Wellen-Triebwerk der eingangs genannten Art ist aus der WO 09502120 vorbekannt. Nachteilig hierbei ist die aufwendige Anordnung mehrerer Getriebe und Kupplungen, die das Gewicht des Triebwerkes erhöhen.

Der Erfindung liegt die Aufgabe zugrunde, ein Zwei-Wellen-Triebwerk mit hohem elektrischem Leistungsbedarf so auszubilden, dass auch beim Betrieb des Flugzeugs bei Leerlauf des Triebwerks (geringe Drehzahlen) die erforderliche hohe elektrische Leistung mit gewichtsmäßig leichten Aggregaten zur Verfügung gestellt werden kann.

Zur Lösung dieser Aufgabe sieht die Erfindung gemäß Anspruch 1 vor, dass die Kupplung als elektromagnetische Kupplung ausgebildet ist und die elektromagnetische Kupplung auf der Seite der Niederdruckwelle mit einem in der Drehfrequenz regelbaren magnetischen Drehfeld versehen ist, das von der Triebwerkssteuerung steuerbar ist.

Der Grundgedanke der Erfindung besteht in der Nutzung der Leistung der Niederdruckwelle zur Erzeugung elektrischer Energie durch getriebelose Leistungsübertragung von der Niederdruckwelle auf die Hochdruckwelle. Dadurch kann auf die bei der unmittelbaren Energieerzeugung mit der in einem weiten Drehzahlbereich drehenden Niederdruckwelle erforderliche aufwendige Anordnung mehrerer Getriebe verzichtet werden.

In weiterer vorteilhafter Ausbildung der Erfindung erfolgt die Leistungsübertragung von der in einem niedrigeren Drehzahlbereich als die Hochdruckwelle betriebenen Niederdruckwelle mit Hilfe der elektromagnetischen Kupplung, deren niederdruckwellenseitiges Kupplungsteil zur Erzeugung eines in der Frequenz steuerbaren Drehfeldes mit einer Leistungselektronik (Triebwerkssteuerung) verbunden ist, um die Leistung der mit geringerer Drehzahl als die Hochdruckwelle drehenden Niederdruckwelle auf die Hochdruckwelle übertragen zu können.

Das Kupplungsteil auf der Seite der Niederdruckwelle ist ein Spulenring mit mehreren einzelnen, ringförmig angeordneten Spulenabschnitten, die von der Leistungselektronik (Triebwerkssteuerung) - jeweils gegenüberliegend nacheinander und mit bestimmter Frequenz - zugeschaltet werden, um so ein in der Frequenz steuerbares Drehfeld zu erzeugen, in das ein an der Hochdruckwellenseite angebrachter Magnet eingreift.

Gemäß einem weiteren wesentlichen Merkmal der Erfindung ist auf der zur Niederdruckwelle gerichteten Seite der elektromagnetischen Kupplung eine Bremsvorrichtung vorgesehen, um das betreffende Kupplungsteil in einer nicht verdrehbaren Position zu halten und so beim Starten des Triebwerks mit Hilfe des Drehfeldes die Hochdruckwelle ohne zusätzliche Aggregate hochfahren zu können.

Es ist zwar aus der EP 1 519 018 A1 bei Fluggasturbinen ganz allgemein die Verwendung elektromagnetischer Kupplungen zur Leistungsübertragung beim Anlassen der Turbine bekannt. Eine spezielle Ausgestaltung der elektromagnetischen Kupplung wird aber nicht beschrieben.

Ein Ausführungsbeispiel des Zwei-Wellen-Triebwerkes gemäß der Erfindung wird anhand der Zeichnung näher erläutert.
Es zeigen:
- Fig. 1: eine schematische Darstellung eines Zwei-WellenTriebwerks mit zwei mit der Hochdruckwelle verbundenen Generatoren und einer elektromagnetischen Kupplung zur Verbindung der Niederdruckwelle mit der Hochdruckwelle,
- Fig. 2: eine seitliche Schnittansicht der elektromagnetischen Kupplung in vergrößerter Darstellung und
- Fig. 3: eine Schnittansicht der elektromagnetischen Kupplung längs der Linie A-A in Fig. 2.

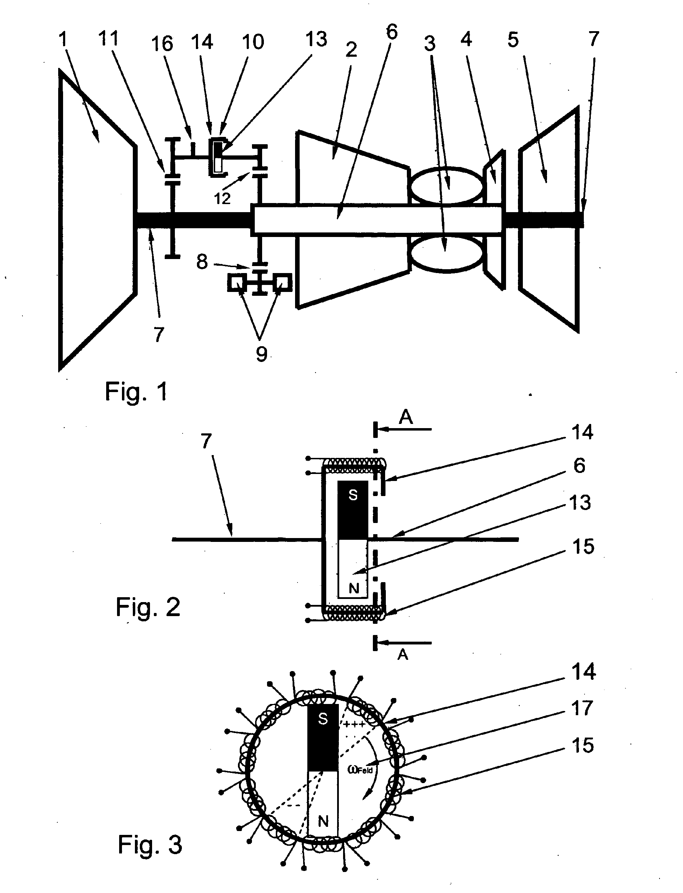

Das in Fig. 1 stark vereinfacht dargestellte Zwei-Wellen-Triebwerk umfasst als wesentliche Bestandteile einen Fan 1, einen Hochdruckverdichter 2, eine Brennkammer 3, eine Hochdruckturbine 4 und eine Niederdruckturbine 5, sowie eine als Hohlwelle ausgeführte Hochdruckwelle 6 und eine durch diese hindurchgeführte Niederdruckwelle 7. Die mit der Niederdruckturbine 5 verbundene und von dieser angetriebene Niederdruckwelle 7 ist am Triebwerkseingang an den Fan 1 angeschlossen, während die von der Hochdruckturbine 4 angetriebene Hochdruckwelle 6 mit dem Hochdruckverdichter 2 verbunden ist. Die Hochdruckwelle 6 ist über ein Getriebe 8 mit zwei Generatoren 9 zur Bereitstellung der für den Betrieb des Flugzeugs erforderlichen elektrischen Energie verbunden.

Die Niederdruckwelle 7 ist zur berührungslosen Drehmomentübertragung mittels einer elektromagnetischen Kupplung 10 an die Hochdruckwelle 6 gekoppelt, und zwar über ein Niederdruckwellengetriebe 11 und ein Hochdruckwellengetriebe 12. Die elektromagnetische Kupplung 10 umfasst einen auf der Hochdruckwellenseite vorgesehenen Magneten 13 und einen auf der Niederdruckwellenseite vorgesehenen Spulenring 14 mit einer Mehrzahl von Spulenabschnitten 15. Die Zuschaltung der Spulenabschnitte 15 bzw. die Frequenz des von diesen erzeugten Drehfeldes 17 wird über die Leistungselektronik des Triebwerks (Triebwerkssteuerung) gesteuert.

Unabhängig von der jeweiligen Drehzahl der Hochdruckwelle 6 und der Niederdruckwelle 7 bzw. der beiden Kupplungsseiten kann durch das mittels der Leistungselektronik bewirkte und in der Frequenz gesteuerte Drehfeld des Spulenrings 14 der elektromagnetischen Kupplung 10 Leistung in dem gewünschten Umfang, das heißt steuerbar, von der Niederdruckwelle 7 auf die Hochdruckwelle 6 übertragen werden. Somit kann von der sich in einem weiten, aber niedrigeren Drehzahlbereich als die Hochdruckwelle 6 drehenden Niederdruckwelle 7 Leistung auf die Hochdruckwelle 6 übertragen werden, die somit bei Flugzeugen mit einem erhöhten Bedarf an elektrischer Energie ("Mehr-Elektrik-Anwendung") auch im Triebwerksleerlauf in der Lage ist, die erforderliche Energie für das Flugzeug zu liefern. Das heißt, dass die unterschiedlichen Drehzahlverhältnisse zwischen der Hoch- und der Niederdruckwelle mit der durch die Leistungselektronik des Triebwerks gesteuerten - beliebig einstellbaren - Drehfeldfrequenz der elektromagnetischen Kupplung 10 ausgeglichen werden können, so dass es möglich ist, die Leistung der Niederdruckwelle 7 durch Drehmomentübertragung auf die Hochdruckwelle 6 zur Erzeugung elektrischer Leistung zu nutzen.

Ein wesentliches Merkmal der Kopplung zwischen der Niederdruckwelle 7 und der Hochdruckwelle 6 ist die in Fig. 1 schematisch dargestellte Bremsvorrichtung 16 (Arretiervorrichtung), mit der die Niederdruckwelle 7 bzw. der Spulenring 14 für den Startvorgang des Triebwerks arretiert wird, um die Hochdruckwelle 6 mit dem von den jetzt feststehenden Spulenabschnitten 15 erzeugten Drehfeld 17 bis auf eine Drehzahl zu beschleunigen, bei der sie eigenständig weiterbeschleunigen kann. Erst dann wird die Bremsvorrichtung 16 gelöst und damit die Bewegung der Niederdruckwelle 7 und des Kupplungsteils 14 auf der Niederdruckwellenseite freigegeben. Der Antrieb der Hochdruckwelle 6 für den Startvorgang erfolgt vorteilhaft somit - ohne einen Fremdantrieb von außen - mit Hilfe der magnetischen Kupplung 10 bei feststehender Niederdruckwelle 7 bzw. feststehenden Kupplungsteil (Spulenring 14).

### Bezugszeichenliste

- 1: Fan
- 2: Hochdruckverdichter
- 3: Brennkammer
- 4: Hochdruckturbine
- 5: Niederdruckturbine
- 6: Hochdruckwelle
- 7: Niederdruckwelle
- 8: Getriebe
- 9: Generator
- 10: Elektromagnetische Kupplung
- 11: Niederdruckwellengetriebe
- 12: Hochdruckwellengetriebe
- 13: Magnet
- 14: Spulenring
- 15: Spulenabschnitt
- 16: Bremsvorrichtung
- 17: Drehfeld

## Patentansprüche

1. Zwei-Wellen-Triebwerk für Flugzeuge mit hohem Bedarf an elektrischer Leistung, das eine mit Generatoren (9) verbundene, von einer Hochdruckturbine (4) angetriebene Hochdruckwelle (6) und eine von einer Niederdruckturbine (5) angetriebene Niederdruckwelle (7) sowie eine elektronische Triebwerkssteuerung umfasst, wobei die Niederdruckwelle (7) zur Leistungsübertragung auf die Hochdruckwelle (6) über eine an die Triebwerkssteuerung angeschlossene Kupplung (10) an die Hochdruckwelle gekoppelt ist,
**dadurch gekennzeichnet,**
**dass** die Kupplung als elektromagnetische Kupplung (10) ausgebildet ist und
**dass** die elektromagnetische Kupplung (10) auf der Seite der Niederdruckwelle (7) mit einem in der Drehfrequenz regelbaren magnetischen Drehfeld (17) versehen ist, das von der Triebwerkssteuerung steuerbar ist.

2. Triebwerk nach Anspruch 1, **dadurch gekennzeichnet, dass** die elektromagnetische Kupplung (10) einen mit der Niederdruckwelle (7) verbundenen Spulenring (14) aus mehreren, von der Triebwerkssteuerung zur Regelung der Drehfeldfrequenz angesteuerten, ringförmig angeordneten Spulenabschnitten (15) und einen mit der Hochdruckwelle (6) verbundenen, in das Drehfeld des Spulenringes (14) eingreifenden Magneten (13) umfasst.

3. Triebwerk nach Anspruch 1 oder 2, **dadurch gekennzeichnet, dass** die beiden Seiten der elektromagnetischen Kupplung (10) jeweils über ein Getriebe (11, 12) an die Niederdruckwelle (7) und an die Hochdruckwelle (6) gekoppelt sind.

4. Triebwerk nach einem der Ansprüche 1 bis 3, **dadurch gekennzeichnet, dass** auf der zur Niederdruckwelle (7) gerichteten Seite der elektromagnetischen Kupplung (10) eine Bremsvorrichtung zum Halten des mit der Niederdruckwelle (7) verbundenen Kupplungsteils (Spulenring 14) in einer nicht verdrehbaren Lage angeordnet ist, um die Hochdruckwelle (6) beim Starten des Triebwerks mit Hilfe des Drehfeldes (17) zu beschleunigen.

## Claims

1. Two-shaft engine for aircraft with high electric power demand which includes a high-pressure shaft (6) connected to generators (9) and driven by a high-pressure turbine (4), a low-pressure shaft (7) driven by a low-pressure turbine (5) as well as an electronic engine control system, with the low-pressure shaft (7) being connected to the high-pressure shaft (6) for power transmission to the latter via a clutch (10) connected to the engine control system,
**characterized in that**
the clutch is designed as an electromagnetic clutch (10), and that the electromagnetic clutch (10) is provided on the side of the low-pressure shaft (7) with a frequency-controllable rotary field (17) which can be activated by the engine control system.

2. Engine in accordance with Claim 1, **characterized in that** the electromagnetic clutch (10) includes a coil ring (14) connected to the low-pressure shaft (7) and having several annularly arranged coil sections (15) activated by the engine control system to control the frequency of the rotary field, and a magnet (13) connected to the high-pressure shaft (6) and engaging the rotary field of the coil ring (14).

3. Engine in accordance with Claim 1 or 2, **characterized in that** the two halves of the electromagnetic clutch (10) are connected to the low-pressure shaft (7) and to the high-pressure shaft (6) each via a gear train (11, 12).

4. Engine in accordance with one of the Claims 1 to 3, **characterized in that** on the side of the electromagnetic clutch (10) facing the low-pressure shaft (7) a braking device is arranged for arresting the clutch element (coil ring 14) connected to the low-pressure shaft (7) in a non-rotatable position, in order to accelerate the high-pressure shaft (6) at engine start by means of the rotary field (17).

## Revendications

1. Moteur à deux arbres pour avions à forte demande en puissance électrique, comprenant d'une part un arbre haute pression (6) entraîné par une turbine haute pression (4) et relié à des génératrices (9), et d'autre part un arbre basse pression (7) entraîné par une turbine basse pression (5) ainsi qu'un système de contrôle électronique de moteur, sachant que pour transmettre la puissance à l'arbre haute pression (6), l'arbre basse pression (7) est couplé à l'arbre haute pression (6) par l'intermédiaire d'un accouplement (10) connecté au système de contrôle du moteur,
**caractérisé en ce**
**que** l'accouplement est conçu d'un accouplement électromagnétique (10) et que du côté de l'arbre basse pression (7), l'accouplement électromagnétique (10) comporte un champ magnétique rotatif (17) dont la fréquence de rotation est réglable et qui peut être commandé par le système de contrôle du moteur.

2. Moteur selon la revendication n° 1, **caractérisé en ce que** l'accouplement électromagnétique (10) comprend un anneau de bobines (14) qui est relié à l'arbre basse pression (7) et constitué de plusieurs sections de bobines (15) disposées en anneau et excitées par le système de contrôle du moteur pour réguler la fréquence du champ rotatif, ainsi que d'un aimant (13) qui est relié à l'arbre haute pression (6) et s'engage dans le champ rotatif de l'anneau de bobines (14).

3. Moteur selon la revendication n° 1 ou n° 2, **caractérisé en ce que** les deux moitiés de l'accouplement électromagnétique (10) sont couplées par une transmission (11, 12) respectivement à l'arbre basse pression (7) et à l'arbre haute pression (6).

4. Moteur selon une des revendications n° 1 à 3, **caractérisé en ce que** sur le côté orienté vers l'arbre basse pression (7) de l'accouplement électromagnétique (10) est disposé un dispositif de freinage destiné à arrêter dans une position non-rotative l'élément de l'accouplement (anneau de bobines 14) relié à l'arbre basse pression (7), afin d'accélérer l'arbre haute pression (6) à l'aide du champ magnétique rotatif (17) lors du démarrage du moteur.
